(19) Europäisches Patentamt
European Patent Office
Office européen des brevets

(11) **EP 3 063 504 B1**

(12) **EUROPÄISCHE PATENTSCHRIFT**

(45) Veröffentlichungstag und Bekanntmachung des Hinweises auf die Patenterteilung:
**30.08.2017 Patentblatt 2017/35**

(21) Anmeldenummer: **15749978.1**

(22) Anmeldetag: **29.06.2015**

(51) Int Cl.:
*G01D 5/12* (2006.01)   *G01D 5/20* (2006.01)
*G01D 5/24* (2006.01)   *G01D 5/241* (2006.01)

(86) Internationale Anmeldenummer:
**PCT/DE2015/200398**

(87) Internationale Veröffentlichungsnummer:
**WO 2016/012017 (28.01.2016 Gazette 2016/04)**

(54) **AKTOR-SENSOR-ANORDNUNG UND VERFAHREN ZUR ANWENDUNG BEI EINER SOLCHEN ANORDNUNG**

ACTUATOR SENSOR ARRANGEMENT AND METHOD FOR APPLICATION WITH SUCH AN ARRANGEMENT

ENSEMBLE ACTIONNEUR-CAPTEUR ET PROCÉDÉ D'UTILISATION D'UN TEL ENSEMBLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.07.2014 DE 102014214439**

(43) Veröffentlichungstag der Anmeldung:
**07.09.2016 Patentblatt 2016/36**

(73) Patentinhaber: **Micro-Epsilon Messtechnik GmbH & Co. KG**
**94496 Ortenburg (DE)**

(72) Erfinder:
• **SCHOPF, Tobias**
**84364 Bad Birnbach (DE)**
• **HOENICKA, Reinhold**
**94496 Ortenburg (DE)**

(74) Vertreter: **Patent- und Rechtsanwälte Ullrich & Naumann**
**PartG mbB**
**Schneidmühlstrasse 21**
**69115 Heidelberg (DE)**

(56) Entgegenhaltungen:
EP-A1- 1 229 301     EP-A1- 1 288 449
EP-A1- 1 538 424     DE-A1-102007 017 346
DE-A1-102012 207 778   US-A1- 2009 243 402

**Beschreibung**

Die Erfindung betrifft eine Aktor-Sensor-Anordnung, mit einem magnetischen Aktor, der mindestens eine Spule, vorzugsweise im Sinne einer Ankerwicklung, aufweist, und einem als Läufer dienenden Magneten, wobei die Spule ein kraftausübendes Magnetfeld erzeugt und dabei eine Kraft zumindest in eine Richtung, beispielsweise in Z-Richtung, auf den Läufer ausübt. Des Weiteren betrifft die Erfindung ein Verfahren zur Anwendung bei einer solchen Anordnung.

In der Praxis gibt es einen steten Bedarf an Aktor-Sensor-Anordnungen der hier in Rede stehenden Art, bei denen der Aktor einen Gegenstand auslenkt. Bei dem Gegenstand kann es sich beispielsweise auf dem Gebiet der Optik um einen Spiegel zur Strahlumlenkung handeln, der geringfügig und dabei äußerst genau zu verkippen ist. Der Spiegel kann insbesondere auch zur Umlenkung eines Laserstrahls dienen, der beispielsweise auf ein Werkstück gelenkt wird. Mannigfaltige Anwendungen sind denkbar, wobei zur Realisierung der Verkippung eine Sensorik erforderlich ist, die die relative Position zwischen dem Aktor und dem Läufer misst. Dabei ist problematisch, dass herkömmliche Sensoren und Sensoranordnungen das kraftausübende Magnetfeld stören, zumindest aber dieses in nicht unerheblichem Umfang beeinflussen. Umgekehrt werden die Sensoren durch das kraftausübende Magnetfeld des Aktors gestört, wodurch die Signalqualität beeinträchtigt wird.

US 2009/243402 A1 zeigt ein Positionsüberwachungssystem zur Positionierung eines Linearmotors, umfassend einen Stator und einen Läufer mit Magneten, wobei der Läufer sich relativ zu dem Stator entlang eines Pfades bewegt. Hierbei detektiert ein Sensor eine Position des Läufers, basierend auf Messungen eines magnetischen Feldes, welches durch die Magneten des Läufers erzeugt wird. Der Sensor ist dabei im kraftübertragenden magnetischen Fluss angeordnet, der die Bewegung des Magneten in die zumindest eine Richtung erfasst.

Des Weiteren ist aus der EP 1 538 424 A1 ein Mikrowellenmesswegsystem für einen elektrodynamischen Direktantrieb bekannt geworden.

Der vorliegenden Erfindung liegt die Aufgabe zugrunde, eine Aktor-Sensor-Anordnung derart auszugestalten und weiterzubilden, dass die erforderliche Sensorik nicht oder allenfalls unwesentlich den Kraftfluss stört und umgekehrt die Sensorik nicht oder allenfalls unwesentlich durch den Aktor gestört wird. Des Weiteren soll ein Verfahren zur Anwendung bei einer solchen Anordnung angegeben werden.

Voranstehende Aufgabe ist durch die Merkmale des Anspruchs 1 gelöst. Danach ist die gattungsbildende Aktor-Sensor-Anordnung unter anderem dadurch gekennzeichnet, dass im kraftübertragenden magnetischen Fluss zwischen der Spule und dem Läufer ein Sensor angeordnet ist, der die Bewegung des Läufers in die zumindest eine Richtung, beispielsweise in Z-Richtung (Abstand Aktor-Läufer), erfasst.

Erfindungsgemäß ist erkannt worden, dass es möglich ist, den zur Detektion der Auslenkung des Läufers erforderlichen Sensor unmittelbar im kraftübertragenden magnetischen Fluss zwischen der Spule und dem Läufer anzuordnen, und zwar im Spalt dazwischen, ohne dass dieser den kraftübertragenden magnetischen Fluss stört oder dadurch im Ausgangssignal gestört wird. Dieser Sensor erfasst die Bewegung des Läufers in zumindest einer Richtung, nämlich in der beispielhaften genannten Z-Richtung, die den Abstand zwischen dem Aktor und dem Läufer definiert. So ist der Sensor mit seiner Sensorspule oder den Elektroden direkt im Fluss der Wirkrichtung des Aktors, nämlich im Wirkfluss, angeordnet.

An dieser Stelle sei angemerkt, dass es zahlreiche Situationen gibt, wonach der Aktor im Vakuum oder zumindest bei Unterdruck und der Läufer bzw. Magnet in der Atmosphäre (oder umgekehrt) angeordnet ist. Im Rahmen einer solchen Ausgestaltung ist es denkbar, dass der Sensor mit seiner körperlichen Ausgestaltung die Trennstelle zwischen dem Vakuum/Unterdruck und der Atmosphäre definiert und dabei eine Abdichtung zwischen diesen Bereichen bildet.

Der Sensor kann unterschiedlich gestaltet sein. Insbesondere kann der Sensor zwei oder mehrere Sensorelemente umfassen, die Bewegungen des Aktors in X-/Y-Richtung, nämlich eine seitliche Auslenkung, und/oder in Z-Richtung, nämlich den Abstand zwischen Aktor und Läufer, erfasst.

Bei dem Sensor kann es sich um einen kapazitiven Sensor in flacher Bauform handeln. In besonders vorteilhafter Weise ist der Sensor als Wirbelstromsensor in flacher Bauform ausgeführt. Der Einfachheit halber wird nachfolgend von einem Wirbelstromsensor mit einer oder mehreren Spule(n) gesprochen. Anstelle der Spulen können in Ausprägung eines kapazitiven Sensors entsprechende Elektroden vorgesehen sein. Der Wirbelstromsensor mit der/den dort vorgesehenen Spule(n) dient lediglich der beispielhaften Erörterung der erfindungsgemäßen Lehre.

Die Sensorelemente sind an eine Elektronik angeschlossen, die in bekannter Weise die (komplexe) Impedanz der Spulen bzw. Elektroden erfasst und in ein Signal umwandelt, das abhängig ist von der relativen Position und/oder Bewegung des Magneten.

Wie bereits zuvor ausgeführt, dient der Magnet als Läufer und wird dieser vom elektromagnetisch arbeitenden Aktor beeinflusst bzw. ausgelenkt. Dem Magneten kann ein Target aus elektrisch leitfähigem Material, beispielsweise einem ferromagnetischen, idealerweise aber nicht-ferromagnetischen Metall, zugeordnet sein, wobei es sich bei dem Targetmaterial bevorzugt um Aluminium oder um eine Aluminiumlegierung handelt. Im Rahmen einer ganz besonders vorteilhaften Ausgestaltung ist der Magnet von dem Target getragen bzw. gehalten. Das Target kann aber auch vom Magneten getragen bzw. gehalten werden.

Das Target dient dazu, die Funktion des Sensors zu optimieren. Das Target besteht aus einem elektrisch leitfähigem Material, welches Wechselwirkungen zwischen dem Magnetfeld der Aktor-Spule und dem Ausgangssignal des Sensors verhindern soll, da im Falle einer direkten Messung gegen den Magneten oder gegen ein ferromagnetisches Material die Ausprägung der vom Sensor erzeugten Wirbelströme vom magnetischen Fluss im Magneten abhängt. Eine Änderung der Ausprägung der Wirbelströme (in Bezug auf Eindringtiefe, Amplitude, Durchmesser) ändert die Rückkopplung auf das vom Sensor erzeugte Feld und beeinflusst damit das Ausgangssignal des Sensors. Besonders vorteilhaft ist die Verwendung eines nicht-ferromagnetischen Materials.

Das Target kann topfartig ausgebildet sein, wobei der Magnet in vorteilhafter Weise in dem topfartigen Target verankert ist bzw. sitzt.

In ganz besonders vorteilhafter Weise ist das Target mit seiner dem Aktor zugewandten Fläche gewölbt bzw. sphärisch ausgeführt, damit bei seitlichen Auslenkungen des Targets ein konstanter Abstand zwischen dieser Fläche und dem Sensor bzw. dem Aktor realisiert ist. Dabei ist der Radius der Fläche dem Radius des ausgelenkten Targets relativ zum Dreh-/Schwenkpunkt angepasst. Dadurch ist in Bezug auf die dem Sensor zugewandten Fläche des Targets eine optimale Situation geschaffen, nämlich ein gleichbleibender Abstand über den Auslenkbereich hinweg.

Bereits zuvor ist ausgeführt worden, dass der Sensor den Bereich zwischen dem Aktor und dem Läufer trennen kann, wobei es dabei von ganz besonderem Vorteil ist, wenn der Sensor dem Aktor zugeordnet ist und diesen überdeckt und dabei gegenüber dem Läufer bzw. Magneten vorzugsweise hermetisch abschließt. So kann der Sensor als endseitige Kappe des Aktors ausgebildet sein, wobei zwischen der Oberfläche des Sensors und dem Target ein möglichst geringer Luftspalt verbleibt, der die Bewegung des Läufers (bestehend aus Target und Magnet) zulässt.

Im Konkreten kann es sich bei dem Sensor um ein keramisches Element handeln, in das die Sensorspule(n) bzw. die Elektrode(n) integriert ist/sind. In weiter vorteilhafter Ausgestaltung kann der Sensor in eine den Aktor abschließende bzw. diesen überdeckende Platte oder Kappe integriert sein, so dass der Sensor ein den Aktor (Aktor-Spule und Kern nebst Kontaktierung, gegebenenfalls Elektronik) umfassendes Gehäuse abschließt.

Das keramische Element kann in bekannter Weise aus mehreren Schichten aufgebaut sein, in dem die Spulen bzw. Elektroden beispielsweis auch zwischen den Schichten ausgeführt sind. Durch den mehrlagigen Aufbau kann eine mehrlagige Spule hoher Stabilität bei geringstem Platzbedarf ausgeführt werden.

Der Aktor kann derart aufgebaut und ausgelegt sein, dass er ausschließlich eine Kraft in Z-Richtung auf den Läufer ausübt, so dass sich dessen Abstand gegenüber dem Aktor verändert. Ebenso ist es denkbar, dass der Aktor derart aufgebaut und ausgelegt ist, dass er zusätzlich oder alternativ eine Kraft in X- und Y-Richtung ausübt, wodurch ein seitliches Auslenken des Läufers bewirkt wird. Dazu hat der Aktor eine doppelte Ausführung der Elemente bei entsprechender Kreuzanordnung, wobei es grundsätzlich denkbar ist, dass der Aktor sowohl in X- und Y-Richtung als auch in Z-Richtung eine Kraft zur entsprechenden Auslenkungen des Läufers ausüben kann. Dies bedingt wiederum eine entsprechende Auslegung des Sensors, der nämlich die Bewegungen zum Zwecke der Regelung der Auslenkung detektieren muss.

Entsprechend kann der Sensor zwei oder mehrere Sensorelemente umfassen, wobei es sich dabei insbesondere um ein- oder mehrlagige Spulen handelt. Die Sensorelemente können nebeneinander oder auch übereinander angeordnet sein. Die Spulen können mit unterschiedlichen Trägerfrequenzen betrieben werden. Dies ermöglicht eine exakte Erfassung des Z-Abstands auch bei einer Messung gegen den Magneten. Der Betrieb mit unterschiedlichen Trägerfrequenzen führt zu einem überbestimmten Gleichungssystem, wodurch sich etwaige "Materialänderungen" durch den magnetischen Fluss mathematisch eliminieren lassen.

Bei der Vorkehrung von mindestens zwei Spulen lassen sich diese direkt hintereinander anordnen, wobei diese alternierend oder kontinuierlich betrieben werden. Standard-Mehrfrequenzverfahren arbeiten mit einer Spule und wechseln die Frequenz. Hier ist es von Vorteil, dass jede Spule individuell in ihrer Induktivität an die Trägerfrequenz anpassbar ist, wodurch sich - bei Vorkehrung von zwei Spulen - diese in der Nähe der Resonanzfrequenz betreiben lassen. So lässt sich ein besseres Signal-Rausch-Verhältnis erzielen. Außerdem kann der Unterschied der beiden Frequenzen ausreichend groß gewählt werden, wohingegen bei einem herkömmlichen Mehrfrequenzverfahren mit einer Spule der Frequenzabstand oft nicht ausreicht, um die erforderlichen Informationen über die zweite Frequenz zu erhalten.

Insbesondere in Bezug auf die Messung in X-/Y-Richtung und gegebenenfalls in Z-Richtung ist es von Vorteil, wenn die Position des Targets bzw. des Magneten mit einem durch die Spulen in seiner Wirkfläche strukturierten Sensor ermittelt wird, wobei das magnetische Feld, welches von der Sensorspule erzeugt wird, durch eine zu- bzw. abnehmende Überdeckung des Targets bzw. Magneten beeinflusst wird. Konkrete Ausgestaltungen entsprechender Sensoren sind im Rahmen der Figurenbeschreibung erörtert.

Ein weiterer Vorteil wird dadurch erreicht, dass der Sensor mindestens ein Spulenpaar umfasst, wobei die Spulen des Spulenpaars in differenzieller Anordnung sind. Der Sensor kann derart ausgelegt sein, dass er neben den Auslenkungen des Targets bzw. Magneten in X- und Y-Richtung gleichzeitig oder alternativ den Abstand gegenüber dem Target bzw. Magneten in Z-Richtung ermittelt, und zwar entweder durch Bildung der Summe der Ausgangssignale aller Einzelspulen oder durch Vorkehrung einer separaten Spule zur Erfassung des Z-Abstands, wobei die Spulen zur Ermittlung der X-/Y-Auslenkung und die separate Spule zur Ermittlung des Z-Abstands vorzugsweise mit unterschiedlichen Trägerfrequenzen angesteuert werden. Die Spulen zur Messung der X-/Y-Auslenkung und die Spule zur Messung des Z-Abstands können gleichzeitig oder unabhängig voneinander betrieben werden, je nach Bedarf.

Zur Überprüfung und gegebenenfalls Kompensation eines Temperaturverlaufs im Innern des Sensors ist es von Vorteil, wenn dort eine Temperaturmessung erfolgt. Dies kann durch Widerstandselemente erfolgen, vorzugsweise in Form gegensinnig ausgeführter Widerstandsbahnen, die sich gemeinsam mit den eigentlichen Sensorelementen im Sensorkörper befinden.

In Bezug auf das erfindungsgemäße Verfahren ist die voranstehende Aufgabe durch die Merkmale des nebengeordneten Anspruchs 18 gelöst.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen

Fig. 1     in einer schematischen Ansicht ein Ausführungsbeispiel einer erfindungsgemäßen Aktor-Sensor-Anordnung, wobei dort der Aktor eine Kraft in Z-Richtung auf den Läufer ausübt,

Fig. 2     in einer schematischen Ansicht ein weiteres Ausführungsbeispiel einer erfindungsgemäßen Aktor-Sensor-Anordnung, wobei dort der Aktor eine Kraft in Z-Richtung auf den Läufer ausübt und der Sensor aus zwei übereinander angeordneten, mehrlagigen Spulen ausgeführt ist,

Fig. 3     in einer schematischen Ansicht ein weiteres Ausführungsbeispiel einer erfindungsgemäßen Aktor-Sensor-Anordnung, wobei dort bei doppelter Ausführung der Elemente und entsprechender Kreuzanordnung der Aktor eine Kraft in X-Richtung und Y-Richtung auf den Läufer ausübt und der Magnet in einem Target sitzt,

Fig. 4 a)   in schematischen Ansichten mögliche Ausgestaltungen bzw. Anordnungen der Spulen eines Wirbelstromsensors, der die Position des Magneten erfassen kann: i) Einzelne Spule ii) Doppelspule nebeneinander in differentieller Anordnung iii) Trapezförmige Doppelspule

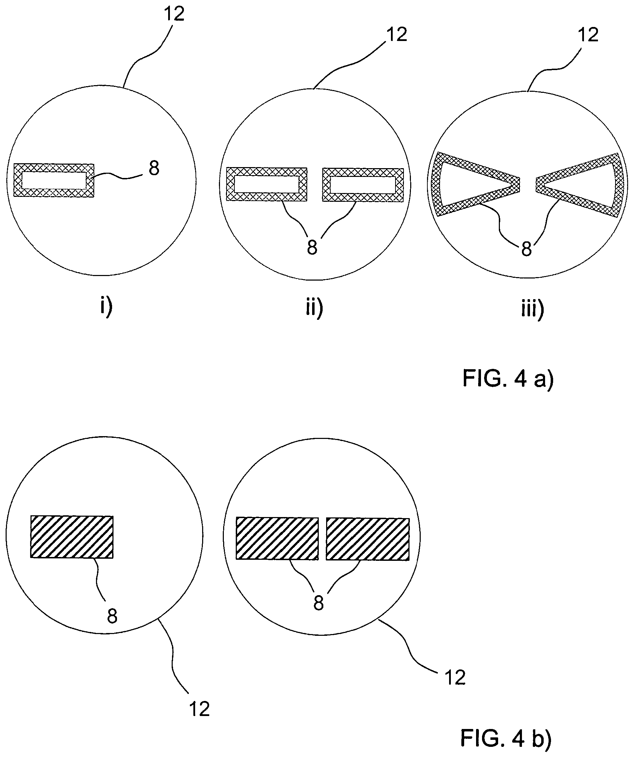

Fig. 4 b)   in schematischen Ansichten mögliche Ausgestaltungen bzw. Anordnungen der Elektroden eines kapazitiven Sensors, der die Position des Magneten erfassen kann,

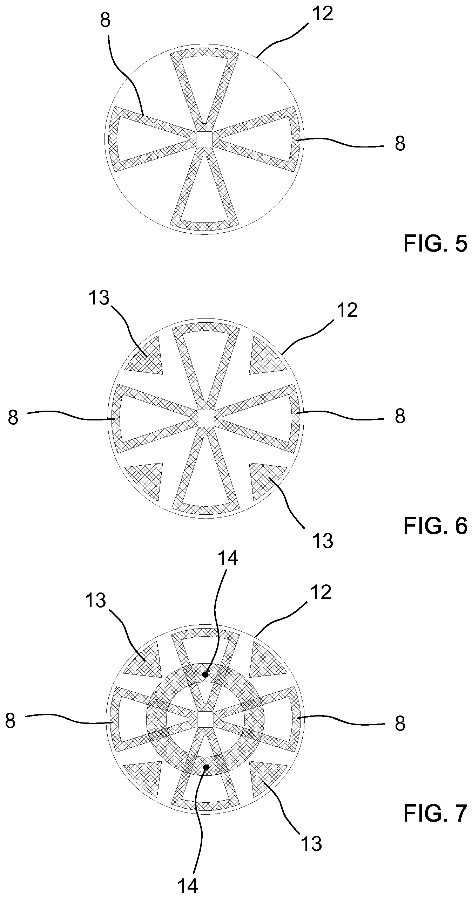

Fig. 5     in einer schematischen Ansicht eine weitere mögliche Ausgestaltung bzw. Anordnung der Spulen eines Wirbelstromsensors, wobei dort zur Bestimmung der X- und Y-Position die Sensorelemente in zwei Achsen angeordnet sind,

Fig. 6     in einer schematischen Ansicht eine weitere mögliche Ausgestaltung bzw. Anordnung der Spulen eines Wirbelstromsensors, wobei dort das eigentliche Sensorelement um Widerstandsbahnen zur Ermittlung der Temperatur innerhalb des Sensors ergänzt ist,

Fig. 7     in einer schematischen Ansicht eine weitere mögliche Ausgestaltung bzw. Anordnung der Spulen eines Wirbelstromsensors, wobei dort eine separate Spule zur Erfassung des Z-Abstands, neben der Erfassung der X-/Y-Auslenkung, eingebracht ist,

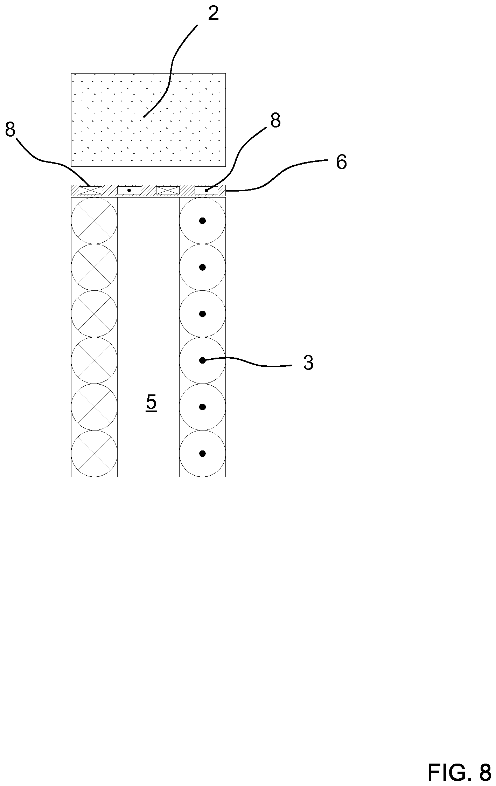

Fig.8      in einer schematischen Ansicht ein weiteres Ausführungsbeispiel einer erfindungsgemäßen Aktor-Sensor-Anordnung mit nebeneinanderliegenden Spulen im Sensorelement,

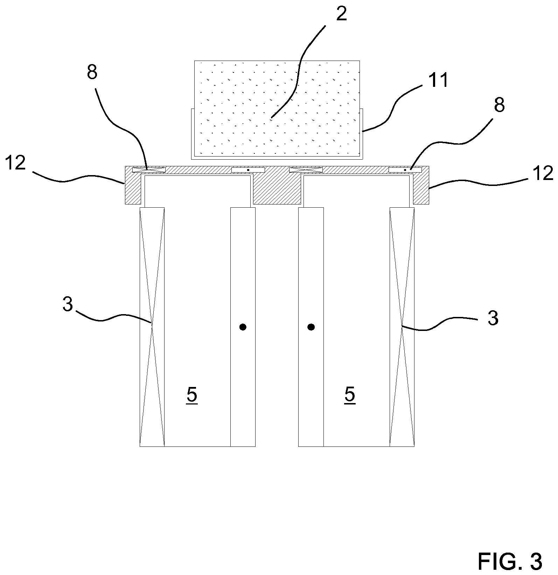

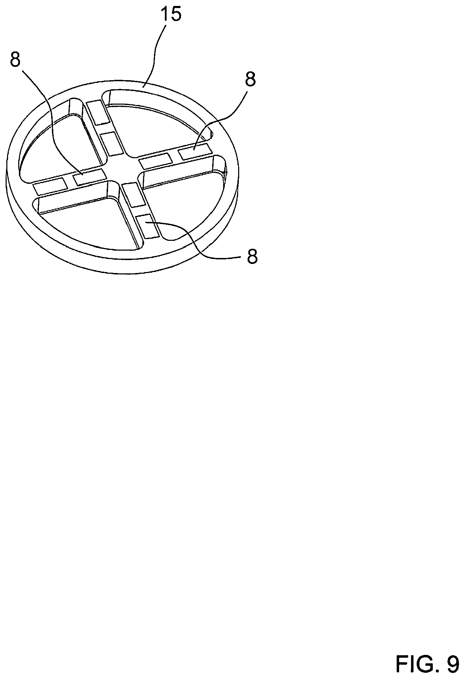

Fig. 9     in einer schematischen Ansicht ein keramisches Sensorelement entsprechend den Darstellungen in den Figuren 4 bis 7, geeignet zur Einbringung in einen Reluktanzmotor gemäß Figur 3, mit Kreuzstruktur und hoher Festigkeit,

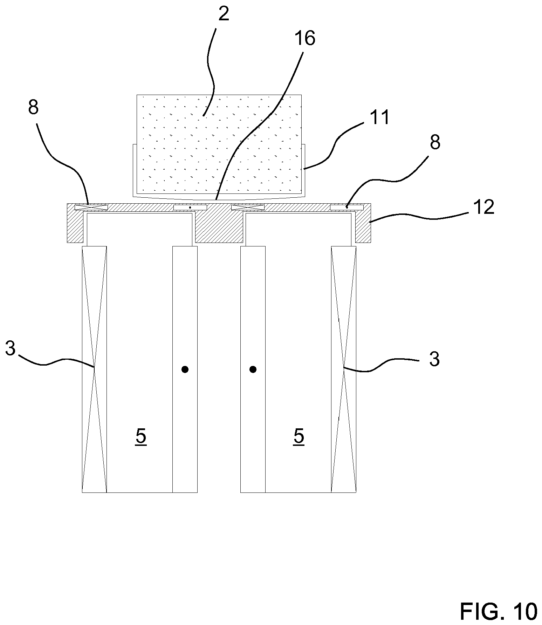

Fig. 10    in einer schematischen Ansicht, ähnlich Fig. 3, nebeneinander angeordnete Aktoren mit gemeinsamer Abdeckung nebst Sensorik und wobei der Magnet in einem Target mit sphärischer Fläche sitzt,

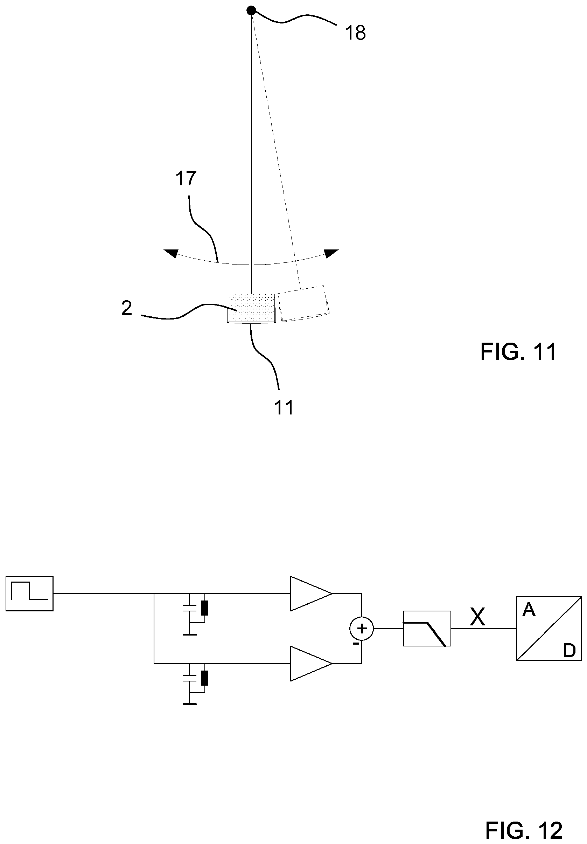

Fig. 11    in einer schematischen Ansicht die Auslenkbewegung des Magneten/Targets bzw. des Läufers entsprechend der Wirkung des Aktors,

Fig. 12    in einem schematischen Diagramm eine konkrete Schaltung zur Verbesserung der Signalempfindlichkeit und

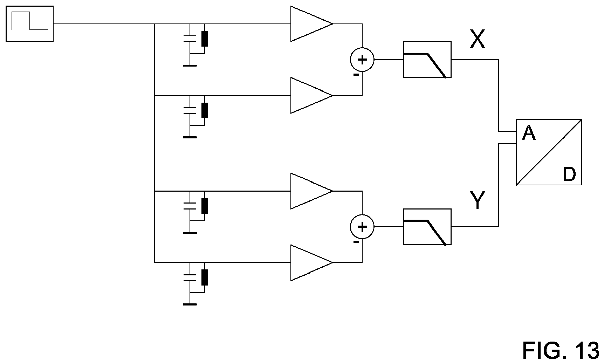

Fig. 13    in einem schematischen Diagramm eine entsprechende Schaltung, die sich in mehreren Translations- und Rotationsachsen applizieren lässt.

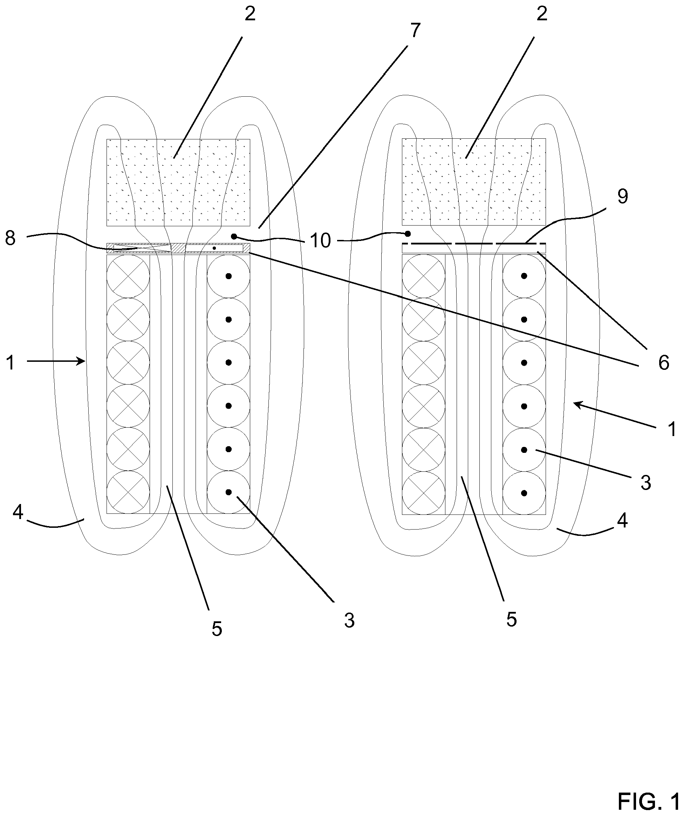

Fig. 1 zeigt einen magnetischen Aktor 1, der eine Kraft in Z-Richtung auf den Läufer 2 ausübt. Dabei handelt es sich um einen Magneten. Dieser kann mit einem zu bewegenden Gegenstand, beispielsweise einem Spiegel, über ein Gestänge verbunden sein. Der Aktor 1 besteht im Wesentlichen aus einer Spule 3 bzw. Ankerwicklung, die das kraftausübende Magnetfeld 4 erzeugt. Typischerweise wird der magnetische Fluss über einen weichmagnetischen Kern 5, der regelmäßig einen niedrigen magnetischen Wiederstand aufweist, geführt. Ankerseitig ist ein Sensor 6 im kraftübertragenden magnetischen Fluss 7 angeordnet.

Auf der linken Seite von Fig. 1 ist der Sensor 6 als Wirbelstromsensor mit einer Spule 8 angedeutet. Auf der rechten Seite ist der Sensor 6 als kapazitiver Sensor 6 mit Elektroden 9 ausgeführt. In beiden Fällen lässt sich die Bewegung des Läufers 2 in Z-Richtung ermitteln, nämlich der Abstand zwischen dem Aktor 1 bzw. den Sensor 6 und dem Läufer 2.

Im Falle der Vorkehrung eines kapazitiven Sensors 6 sind die potentialführenden Elektroden 9 entsprechend dünn ausgeführt, um eine relevante Beeinflussung des kraftführenden magnetischen Feldes 4 zu vermeiden. Entsprechendes gilt in Bezug auf die entsprechende Nutzung eines Wirbelstromsensors mit einer oder mehreren Spulen 8. Auch hier ist eine dünne bzw. flache Ausführung von Vorteil.

Ebenso kann der Sensor 6 zur Erfassung der Z-Position des Läufers 2 als Wirbelstromsensor ausgeführt sein. Hierbei wird der Sensor 6 in einer flachen Bauform ausgeführt um eine Einbringung in den Luftspalt 10, durch welchen der krafterzeugende magnetische Fluss 7 geführt wird, zu ermöglichen. Optional kann an dem Läufer 2 ein Target 11 angebracht werden, um die Performance des Wirbelstromsensors zu optimieren. Das Target 11 sollte aus einem nicht-ferromagnetischen Metall, vorzugsweise aus Aluminium, bestehen. Dies verhindert Wechselwirkungen zwischen dem Magnetfeld 4 der Aktor-Spule 3 und dem Ausgangssignal des Sensors 6, da im Falle einer direkten Messung gegen den Magneten 2 oder gegen ein ferro-magnetisches Material die Ausprägung der vom Sensor 6 erzeugten Wirbelströme vom magnetischen Fluss 7 im Magneten 2 abhängt. Eine Änderung der Ausprägung der Wirbelströme (Eindringtiefe, Amplitude, Durchmesser) ändert die Wirkung auf das vom Sensor 6 erzeugte Feld und ändert damit auch das Ausgangssignal des Sensors 6.

Der Läufer kann vom Anker in allen Fällen auch hermetisch abgeschlossen sein. In diesem Falle ist der Sensor 6 als keramisches Element ausgeführt, welches - im Falle eines kapazitiven Sensors - die potentialführenden Flächen innen oder außen enthält.

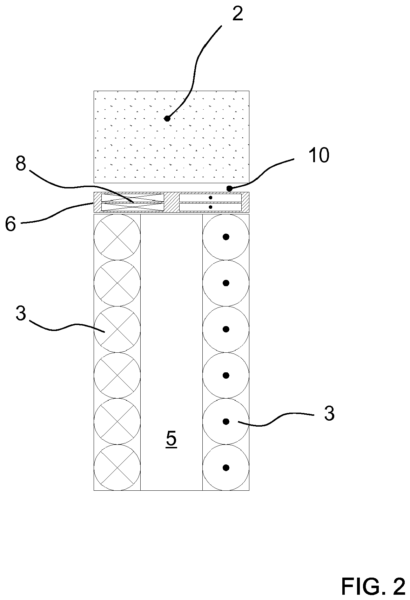

Fig. 2 zeigt ein weiteres Ausführungsbeispiel einer erfindungsgemäßen Aktor-Sensor-Anordnung, wobei dort der magnetische Aktor 1 eine Kraft in Z-Richtung auf den Läufer 2 bzw. Magneten ausübt. Hier gelten die gleichen Ausführungen wie zu Fig. 1, wobei in Fig. 2 der Sensor 6 aus zwei übereinander angeordneten Sensorelementen, nämlich ein- oder mehrlagigen Spulen ausgeführt ist.

Entsprechend lässt sich ein Wirbelstromsensor als Mehrspulenvariante ausführen, wobei die beiden Spulen 8 mit unterschiedlichen Trägerfrequenzen betreibbar sind. Dies ermöglicht eine genauere Erfassung des Z-Abstands auch bei einer Messung gegen den Magneten 2. Hierbei werden die beiden Sensorspulen 8 mit unterschiedlichen Trägerfrequenzen angesteuert. Damit erhält man ein überbestimmtes Gleichungssystem und kann die "Materialänderung" durch den magnetischen Fluss mathematisch egalisieren.

In Bezug auf die erfindungsgemäße Aktor-Sensor-Anordnung ist von Bedeutung, dass zwei Spulen 8 direkt hintereinander bzw. nebeneinander anordenbar sind und alternierend oder kontinuierlich im Eingriff sind bzw. betrieben werden. Bei bislang üblichen Mehrfrequenzverfahren wird mit einer Spule und wechselnder Frequenz gearbeitet. Bei der hier realisierten Ausführung kann eine Anpassung einer jeden Spule (Induktivität) 8 an die Trägerfrequenz erfolgen. Damit lassen sich die beiden oder mehreren Spulen 8 in der Nähe der Resonanzfrequenz betreiben. Dies liefert ein besseres Signal-Rausch-Verhältnis. Zudem kann der Unterschied der beiden Frequenzen ausreichend groß gewählt werden. Bei dem klassischen Mehrfrequenzverfahren unter Nutzung einer einzigen Spule kann der Frequenzabstand oft nicht ausreichend groß genug gewählt werden, um den erforderlichen Informationsgewinn durch die zweite Frequenz zu erhalten.

Der Läufer 2 kann auch im Falle einer Mehrspulenanordnung vom Aktor 1 hermetisch abgeschlossen sein. In diesem Falle ist der Sensor 6 als keramisches Element 12 ausgeführt, in welches beide Spulen 8 eingebettet sind.

Fig. 3 zeigt einen magnetischen Aktor 1, der eine Kraft in X-Richtung bzw. bei doppelter Ausführung der Elemente und entsprechender Kreuzanordnung in X- und Y- Richtung ausübt. Auch in Z-Richtung kommt es zu einer Kraftwirkung, welche hier jedoch nicht weiter genutzt bzw. betrachtet wird.

Die Position des Magneten 2 kann mit einem Wirbelstromsensor 6 mit Spulen 8 entsprechend den Darstellungen in Fig. 4 a) erfasst werden. Dabei erfolgt eine Beeinflussung des magnetischen Feldes, welches von der Sensorspule 8 erzeugt wird, durch eine zu- bzw. abnehmende Überdeckung des Magneten 2 oder eines am Magneten 2 angebrachten Targets 11. Da sich hierbei bei Verwendung eines Sensors 6 mit nur einer Spule 8 (Fig. 4 a)i)) eine starke Abhängigkeit des Sensorsignals vom Abstand Z ergibt, wird ein Sensor 6 mit zwei Spulen 8 in differentieller Anordnung verwendet (Fig. 4 a) ii) und iii)). Das Ausgangssignal des Sensors 6 ist somit nicht direkt vom Abstand Z beeinflusst. Auch wird die Stabilität bezüglich Temperatur und Langzeiteffekten durch die differentielle Anordnung der Spulen 8 verbessert. Der Sensor 6 ist auch in dieser Ausführung entsprechend flach ausgeführt, um eine Einbringung direkt in den magnetischen Fluss zu ermöglichen.

Die Position des Magneten 2 kann auch mit einem kapazitiven Sensor 6 mit Elektroden 8 entsprechend den Darstellungen in Fig. 4 b) erfasst werden. Dabei erfolgt eine Beeinflussung des elektrischen Feldes, welches von den Sensorelektroden 8 erzeugt wird, durch eine zu- bzw. abnehmende Überdeckung des Magneten 2 oder eines am Magneten 2 angebrachten Targets 11. Sinngemäß gilt gleiches wie beim Wirbelstromsensor für die Verwendung von einzelnen bzw. doppelten, in differentieller Anordnung ausgeführten Elektroden.

Die Sensorelemente können entsprechend der Darstellung in Fig. 5 auch in zwei Achsen angeordnet sein, wodurch eine Bestimmung der X- und Y-Position des Magneten 2 bzw. Targets möglich ist. Führt der Magnet 2 bzw. das Target keine reine laterale Bewegung in X- und/oder Y- Richtung durch, sondern stattdessen eine Bewegung auf einer Kugeloberfläche (dazu ist der Magnet 2 auf einem gedachten Drehpunkt 18 entfernt vom Sensor 6 gelagert), ergibt sich ein nicht lineares Ausgangssignal. Das heißt, bei zunehmender Auslenkung nimmt aufgrund des größeren Abstands das Signal-Rausch-Verhältnis ab. Ebenso nimmt die Signalsteigung mit zunehmender Auslenkung ab. Dem kann eine Ausgestaltung der Sensorspulen 8 (oder der Sensorelektrode 9 beim kapazitiven Sensor 6) als "Trapez" entgegenwirken. Das heißt, der wirksame Querschnitt der Spule 8 oder Elektrode 9 nimmt mit zunehmender Auslenkung und damit mit zunehmendem Abstand ebenfalls zu. Damit kann die Steigung und das Signal-Rausch-Verhältnis des Ausgangssignals konstant gehalten werden.

Entsprechend der Darstellung in Fig. 6 kann der Sensor 6 um Widerstandsbahnen 13 ergänzt werden, um temperaturbedingte Einflüsse auf das Sensorsignal eliminieren bzw. kompensieren zu können. Dabei kann durch einfache Messung des ohmschen Widerstands auf die Temperatur im Sensorelement 15 geschlossen werden. Die Widerstandbahnen 13 werden in gegensinniger (bifilarer) Weise ausgeführt, um eine Beeinflussung der Sensorspulen 8 zu vermeiden. Die Widerstandsbahnen 13 können zur besseren Erfassung von Gradienten räumlich auf dem Sensorelement verteilt sein. Dabei können die für die Temperaturerfassung eingebrachten Bahnen in X- und Y-Richtung zwischen den Sensorspulen 8 liegen. Auch können die Widerstandsbahnen 13 in Z-Richtung in einem eigenen Layer vor, zwischen oder über den Sensorspulen 8 liegen. Auch eine Kombination der Anordnungen ist möglich.

Soll neben der Auslenkung in X- und Y-Richtung auch noch der Abstand in Z-Richtung erfasst werden, kann dies durch die Bildung der Summe des Ausgangssignals aller Einzelspulen erfolgen:

$$Z = X_1 + X_2 + Y_1 + Y_2$$

Dabei sind $X_i$ und $Y_i$ (i = 1,2) jeweils die einzelnen Signale der in X- bzw. Y-Richtung gegenüberliegenden Spulen.

Alternativ kann auch eine separate Spule 14 zur Erfassung des Z-Abstands eingebracht sein, wie dies in Fig. 7 gezeigt ist. Dabei werden die Spulen 8 zur Erfassung der X/Y-Auslenkung und die Spule 14 zur Erfassung der Z-Auslenkung typischerweise mit unterschiedlichen Trägerfrequenzen angesteuert, um Wechselwirkungen (Schwebungen) zu vermeiden. Bei entsprechender Beschaltung des Demodulators hat jede Spule 8, 14 bzw. das Spulenpaar 8 für sich ein Bandpassverhalten. Damit können die Spulen zur Überdeckungsmessung (X, Y) und zur Abstandsmessung (Z) gleichzeitig und unabhängig voneinander betrieben werden.

Fig. 8 zeigt den Sensor 6 in Mehrspulenanordnung, wobei dort zwei Spulen 8 nebeneinander liegen.

Um das Sensorelement 15 in den magnetischen Fluss einzubringen, muss dieses so dünn wie möglich ausgeführt sein. Dient das Sensorelement 15, wie beschrieben, zur Abtrennung (Hermetisierung) zweier Räume mit unterschiedlichen Drücken, so muss das Element so ausgeführt sein, dass es zum einen mechanisch stabil ist, um durch den Druckunterschied nicht schadhaft zu werden, zum anderen soll der magnetische Widerstand zwischen dem magnetischen Kern 5 und dem Magneten 2 so klein als möglich sein, um eine maximale Kraft und einen maximalen Wirkungsgrad des Aktors 1 zu erreichen.

Fig. 9 zeigt die Ausführung eines keramischen Sensorelements 15, wie in Fig. 4 bis Fig. 7 dargestellt, zur Einbringung in einen Reluktanzmotor (Reluktanz = magnetischer Widerstand) gemäß Fig. 3. Dabei ist eine relativ große Dicke (mehrfache Dicke zu den Spulensegmenten) für die Kreuzstruktur gewählt, um eine hohe Festigkeit gegen Biegebeanspruchung aufgrund des Druckunterschieds zu erreichen. Im Bereich des magnetischen Kerns 5, welcher den magnetischen Fluss führt und einen möglichst kleinen magnetischen Widerstand zum Magneten 2 aufweisen soll, ist die Dicke des Sensorelements 15 soweit wie möglich reduziert. Die Kontaktanschlüsse für die verschiedenen Sensorelemente (X,Y,Z,Temperatur) sind in die Streben der Struktur gelegt, um zum einen den maximalen Querschnitt für die Polschuhe zu ermöglichen, zum andern den Rand freizuhalten, um das Sensorelement 15 hermetisch dicht einbringen zu können. Das keramische Sensorelement 15 kann dabei durch Einpressen, Laserlöten, Vakuumlöten, in eine Struktur oder Gehäuse eingebracht werden.

Entsprechend der Darstellung in Fig. 10 kann das Target 11 anstatt eben und flächig auch als beliebig geformte Fläche 16 ausgeführt sein, um Sekundäreinflüsse zu minimieren. Typischerweise wird das Target 11 sphärisch ausgeführt, um einen konstanten Abstand zwischen dem Sensor 6 und dem Target 11 auch bei Auslenkung zu erreichen. Der Radius des sphärischen Targets 11 ist dabei dem Radius des ausgelenkten Magneten 2 relativ zum Drehpunkt 18 angepasst.

Fig. 11 zeigt die seitliche Auslenkung des Targets 11 entsprechend den voranstehenden Ausführungen.

Die Fig. 12 und 13 zeigen mögliche Schaltungen in Bezug auf unterschiedliche Ausführungsformen der erfindungsgemäßen Aktor-Sensor-Anordnung.

Die beiden Sensorspulen 8 werden zur Verbesserung der Signalempfindlichkeit mit einer Kapazität zu einem Schwingkreis ergänzt, welcher typischerweise in der Nähe seiner Eigenresonanz betrieben wird. Dieser Schwingkreis wird von einer Wechselspannung mit fester Frequenz gespeist. Aus den Sensorsignalen wird in einem Demodulator (zum Beispiel Amplituden-Demodulation) ein Pulsweiten moduliertes Signal generiert, bei dem die Verkippungsinformation nahezu direkt proportional zur Pulsbreite abgebildet ist. Im Demodulator wird auch direkt die Differenzbildung zwischen den beiden Spulensignalen realisiert. Von dem Pulsweiten modulierten Signal wird mit einem Tiefpassfilter der Wechselspannungsanteil des Signals ausgefiltert. Der daraus resultierende Gleichspannungsanteil kann über einen Analog-Digital-Wandler in einen digitalen Verkippungswert gewandelt werden. Dieser digitale Wert für die Verkippung kann über eine geeignete Signalverarbeitung noch weiter aufbereitet werden. Möglich ist hierbei z. B. eine Temperaturkompensation bzw. eine Kompensation des Übersprechens, was sich aus der Wechselwirkung der einzelnen Sensorspulen zwischen den beiden Kanälen ergibt. Eine solche Kompensation ist möglich, da die Amplitude des Übersprechens durch den Kopplungsfaktor der Spulen definiert ist, welcher wiederum durch die feste Geometrie der Spulenanordnung gegeben ist.

Entsprechend zu den Ausführungen gemäß Figur 12, kann diese Auswertung auch in mehreren Translations- bzw. Rotationsachsen appliziert werden (siehe Fig. 13).

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehend beschriebenen Ausführungsbeispiele der erfindungsgemäßen Lehre lediglich zur Erörterung der beanspruchten Lehre dienen, diese jedoch nicht auf die Ausführungsbeispiele einschränken.

**Bezugszeichenliste**

1 Aktor
2 Läufer, Magnet, Anker
3 Spule (des Aktors)
4 kraftausübendes Magnetfeld
5 Kern (des Aktors)
6 Sensor (Wirbelstromsensor oder kapazitiver Sensor)
7 kraftübertragender magnetischer Fluss
8 Spule, Sensorspule
9 Elektrode des kapazitiven Sensors
10 Luftspalt
11 Target
12 keramisches Element
13 Widerstandsbahnen
14 separate Spule für Z-Abstand
15 Sensorelement, keramisch
16 Fläche des Targets
17 Auslenkung des Targets
18 Drehpunkt der Bewegung des Targets

**Patentansprüche**

1. Aktor-Sensor-Anordnung, mit einem magnetischen Aktor (1), der mindestens eine Spule (3), vorzugsweise im Sinne einer Ankerwicklung, aufweist, und einem als Läufer dienenden Magneten (2), wobei die Spule (3) ein kraftausübendes Magnetfeld (4) erzeugt und dabei eine Kraft zumindest in eine Richtung, auf den Magneten (2) ausübt, wobei im kraftübertragenden magnetischen Fluss (7) ein Sensor (6) angeordnet ist, der die Bewegung des Magneten (2) in die zumindest eine Richtung erfasst, **dadurch gekennzeichnet, dass** der Sensor (6) zwischen der Spule (3) und dem Magneten (2) angeordnet ist und dass der Sensor (6) zwei oder mehrere Sensorelemente umfasst, die Bewegungen des Aktors (1) in X-/Y-Richtung, also seitliche Auslenkungen, erfassen.

2. Anordnung nach Anspruch 1, **dadurch gekennzeichnet, dass** die Sensorelemente (6) auch die Bewegungen des Aktors (1) in Z-Richtung, also den Abstand zwischen Aktor (1) und Magnet (2), erfassen und/oder dass dazu ein weiteres Sensorelement vorgesehen ist.

3. Anordnung nach Anspruch 1 oder 2, **dadurch gekennzeichnet, dass** der Sensor (6) ein kapazitiver Sensor in flacher Bauform oder ein Wirbelstromsensor in flacher Bauform ist.

4. Anordnung nach einem der Ansprüche 1 bis 3, **dadurch gekennzeichnet, dass** auf dem Magnet (2) ein vorzugsweise nicht-ferromagnetisches, elektrisch leitfähiges Target (11), insbesondere aus Aluminium, aufgebracht ist, wobei das Target (11) topfartig ausgebildet sein kann und wobei der Magnet (2) vorzugsweise in dem Target (11) sitzt.

5. Anordnung nach Anspruch 4, **dadurch gekenn-**

**zeichnet, dass** das Target (11) mit seiner dem Aktor (1) zugewandten Fläche (16) gewölbt bzw. sphärisch ausgeführt ist, damit bei seitlichen Auslenkungen des Targets (11) ein konstanter Abstand zwischen dieser Fläche (16) und dem Sensor (6) bzw. dem Aktor (1) realisiert ist, wobei der Radius der Fläche dem Radius des ausgelenkten Targets (11) relativ zu einem Drehpunkt (18) angepasst ist.

6. Anordnung nach einem der Ansprüche 1 bis 5, **dadurch gekennzeichnet, dass** der Sensor (6) dem Aktor (1) zugeordnet ist und diesen überdeckt und gegenüber dem Magneten (2) vorzugsweise hermetisch abschließt, wobei der Sensor (6) in ein keramisches, vorzugsweise mehrlagiges Element (12) integriert sein kann.

7. Anordnung nach Anspruch 6, **dadurch gekennzeichnet, dass** der Sensor (6) in eine den Aktor (1) abschließende bzw. überdeckende Platte oder Kappe integriert ist.

8. Anordnung nach einem der Ansprüche 1 bis 7, **dadurch gekennzeichnet, dass** der Aktor (1) derart aufgebaut und ausgelegt ist, dass er eine Kraft in X-Richtung oder, bei doppelter Ausführung der Elemente und entsprechender Kreuzanordnung, in X- und Y-Richtung, ggf. auch in Z-Richtung, ausübt.

9. Anordnung nach einem der Ansprüche 1 bis 8, **dadurch gekennzeichnet, dass** der Sensor (6) zwei oder mehrere Sensorelemente, insbesondere Spulen (8), umfasst, die mit unterschiedlichen Trägerfrequenzen betrieben werden.

10. Anordnung nach einem der Ansprüche 1 bis 9, **dadurch gekennzeichnet, dass** die Position des Targets (11) bzw. des Magneten (2) mit einem durch die Spule(n) (8) in seiner Wirkfläche strukturierten Sensor (6) ermittelt wird, wobei das magnetische Feld, welches von der Sensorspule (8) erzeugt wird, durch eine zu- bzw. abnehmende Überdeckung des Targets (11) bzw. Magneten (2) beeinflusst wird.

11. Anordnung nach einem der Ansprüche 1 bis 10, **dadurch gekennzeichnet, dass** der Sensor (6) mindestens ein Spulenpaar (8) umfasst, wobei die Spulen (8) des Spulenpaars (8) in differentieller Anordnung sind.

12. Anordnung nach einem der Ansprüche 1 bis 11, **dadurch gekennzeichnet, dass** der Sensor (6) derart ausgelegt ist, dass er neben den Auslenkungen (17) des Targets (11) bzw. Magneten (2) in X- und Y-Richtung auch den Abstand gegenüber dem Target (11) bzw. Magneten (2) in Z-Richtung ermittelt, entweder durch Bildung der Summe der Ausgangssignale aller Einzelspulen (3) oder durch eine separate Spule (8) zur Erfassung des Z-Abstands, wobei die Spulen (3) zur Ermittlung der X-/Y-Auslenkung und die Spule (8) zur Ermittlung des Z-Abstands vorzugsweise mit unterschiedlichen Trägerfrequenzen angesteuert werden.

13. Anordnung nach Anspruch 12, **dadurch gekennzeichnet, dass** die Spulen (3) zur Messung der X-/Y-Auslenkung und die Spule (8) zur Messung des Z-Abstandes gleichzeitig oder unabhängig voneinander betreibbar sind.

14. Anordnung nach einem der Ansprüche 1 bis 13, **dadurch gekennzeichnet, dass** der Sensor (6) zur Temperaturmessung im Sensor (6) um Widerstandselemente, vorzugsweise in Form gegensinnig ausgeführter Widerstandsbahnen (13), ergänzt ist.

15. Verfahren zum Messen der Bewegung eines durch einen magnetischen Aktor ausgelenkten Läufers, wobei der Aktor mindestens eine Spule, vorzugsweise im Sinne einer Ankerwicklung, aufweist, wobei der Läufer ein Magnet ist und wobei die Spule ein kraftausübendes Magnetfeld erzeugt und dabei eine Kraft zumindest in eine Richtung, auf den Magneten ausübt, insbesondere zur Anwendung in einer Aktor-Sensor-Anordnung nach einem der Ansprüche 1 bis 14, wobei die Bewegung des Magneten in die zumindest eine Richtung durch einen Sensor erfasst wird, wobei der Sensor im kraftübertragenden magnetischen Fluss angeordnet wird, **dadurch gekennzeichnet, dass** der Sensor zwischen der Spule (3) und dem Magneten (2) angeordnet wird und dass der Sensor (6) zwei oder mehrere Sensorelemente umfasst, die Bewegungen des Aktors (1) in X-/Y-Richtung, also seitliche Auslenkungen, erfassen.

## Claims

1. Actuator/sensor arrangement, having a magnetic actuator (1) which has at least one coil (3), preferably in the manner of an armature winding, and a magnet (2) which acts as a rotor, wherein the coil (3) produces a magnetic field (4) which applies force and in this instance applies a force in at least one direction to the magnet (2), wherein in the force-transmitting magnetic flux (7) there is arranged a sensor (6) which detects the movement of the magnet (2) in the at least one direction,
**characterised in that** the sensor (6) is arranged between the coil (3) and the magnet (2) and **in that** the sensor (6) comprises two or more sensor elements which detect movements of the actuator (1) in the X/Y direction, that is to say, lateral redirections.

2. Arrangement according to claim 1, **characterised in that** the sensor elements (6) also detect the movements of the actuator (1) in the Z direction, that is to say, the spacing between the actuator (1) and magnet (2) and/or **in that** an additional sensor element is provided for this purpose.

**3.** Arrangement according to claim 1 or 2, **characterised in that** the sensor (6) is a capacitive sensor of the flat construction type or an eddy current sensor of the flat construction type.

**4.** Arrangement according to any one of claims 1 to 3, **characterised in that** a preferably non-ferromagnetic, electrically conductive target (11), in particular of aluminium, is applied to the magnet (2), wherein the target (11) may be constructed in a pot-like manner and wherein the magnet (2) is preferably located in the target (11).

**5.** Arrangement according to claim 4, **characterised in that** the target (11) with the face (16) thereof facing the actuator (1) is constructed in a curved or spherical manner so that in the event of lateral redirections of the target (11) a constant spacing is produced between this face (16) and the sensor (6) or the actuator (1), wherein the radius of the face is adapted to the radius of the redirected target (11) relative to a rotation location (18).

**6.** Arrangement according to any one of claims 1 to 5, **characterised in that** the sensor (6) is associated with the actuator (1) and covers it and preferably hermetically closes it with respect to the magnet (2), wherein the sensor (6) may be integrated in a ceramic, preferably multi-layer element (12).

**7.** Arrangement according to claim 6, **characterised in that** the sensor (6) is integrated in a plate or cap which closes or covers the actuator (1).

**8.** Arrangement according to any one of claims 1 to 7, **characterised in that** the actuator (1) is constructed and configured in such a manner that it applies a force in the X direction or, in the case of a dual construction of the elements and a corresponding cross-like arrangement, in the X and Y direction, where applicable also in the Z direction.

**9.** Arrangement according to any one of claims 1 to 8, **characterised in that** the sensor (6) comprises two or more sensor elements, in particular coils (8), which are operated with different carrier frequencies.

**10.** Arrangement according to any one of claims 1 to 9, **characterised in that** the position of the target (11) or the magnet (2) is established by means of a sensor (6) which is structured by the coil(s) (8) in terms of the operating face thereof, wherein the magnetic field which is produced by the sensor coil (8) is influenced by an increasing or decreasing coverage of the target (11) or magnet (2).

**11.** Arrangement according to any one of claims 1 to 10, **characterised in that** the sensor (6) comprises at least one coil pair (8), wherein the coils (8) of the coil pair (8) are in a differential arrangement.

**12.** Arrangement according to any one of claims 1 to 11, **characterised in that** the sensor (6) is configured in such a manner that, in addition to the redirections (17) of the target (11) or magnet (2) in the X and Y direction, it also establishes the spacing with respect to the target (11) or magnet (2) in the Z direction, either by forming the sum of the output signals of all the individual coils (3) or by means of a separate coil (8) for detecting the Z spacing, wherein the coils (3) for establishing the X/Y redirection and the coil (8) for establishing the Z spacing are preferably controlled with different carrier frequencies.

**13.** Arrangement according to claim 12, **characterised in that** the coils (3) for measuring the X/Y redirection and the coil (8) for measuring the Z spacing can be operated at the same time or independently of each other.

**14.** Arrangement according to any one of claims 1 to 13, **characterised in that** the sensor (6) for measuring temperature in the sensor (6) is supplemented by resistance elements, preferably in the form of resistance paths (13) which are constructed in opposite directions to each other.

**15.** Method for measuring the movement of a rotor which is redirected by means of a magnetic actuator, wherein the actuator has at least one coil, preferably in the manner of an armature winding, wherein the rotor is a magnet and wherein the coil produces a magnetic field which applies force and in this instance applies a force in at least one direction to the magnet, in particular for use in an actuator/sensor arrangement according to any one of claims 1 to 14, wherein the movement of the magnet in the at least one direction is detected by means of a sensor, wherein the sensor is arranged in the force-transmitting magnetic flux, **characterised in that** the sensor is arranged between the coil (3) and the magnet (2) and **in that** the sensor (6) comprises two or more sensor elements which detect movements of the actuator (1) in the X/Y direction, that is to say, lateral redirections.

**Revendications**

**1.** Dispositif actionneur-capteur, avec un actionneur magnétique (1), qui comprend au moins une bobine (3), de préférence au sens d'un enroulement d'induit, et un aimant (2) servant de rotor, la bobine (3) générant un champ magnétique (4) exerçant une force et exerçant ainsi une force dans au moins une direction sur l'aimant (2), un capteur (6) étant disposé dans le flux magnétique (7) transmettant la force, qui mesure le mouvement de l'aimant (2) dans l'au moins une direction, **caractérisé en ce que** le capteur (6) est disposé entre la bobine (3) et l'aimant (2) et **en ce que** le capteur (6) comprend deux éléments de capteurs ou plus, qui mesurent les mouvements de l'actionneur (1) dans la direction X/Y, donc les déviations latérales.

2. Dispositif selon la revendication 1, **caractérisé en ce que** les éléments de capteurs (6) mesurent également les mouvements de l'actionneur (1) dans la direction Z, donc la distance entre l'actionneur (1) et l'aimant (2) et/ou **en ce qu'**un autre élément de capteur est prévu pour cela.

3. Dispositif selon la revendication 1 ou 2, **caractérisé en ce que** le capteur (6) est un capteur capacitif de forme plate ou un capteur de courants de Foucault de forme plate.

4. Dispositif selon l'une des revendications 1 à 3, **caractérisé en ce que**, sur l'aimant (2) est monté une cible (11) électro-conductrice, de préférence non ferromagnétique, plus particulièrement constituée d'aluminium, la cible (11) pouvant présenter la forme d'une cloche et l'aimant (2) étant posé de préférence dans la cible (11).

5. Dispositif selon la revendication 4, **caractérisé en ce que** la cible (11) présente une forme voûtée ou sphérique avec sa surface (16) orientée vers l'actionneur (1), afin que, lors de déviations latérales de la cible (11), une distance constante entre cette surface (16) et le capteur (6) ou l'actionneur (1) soit réalisée, le rayon de la surface étant adapté au rayon de la cible (11) déviée par rapport à un centre de rotation (18).

6. Dispositif selon l'une des revendications 1 à 5, **caractérisé en ce que** le capteur (6) correspond à l'actionneur (1) et recouvre celui-ci et l'obture de préférence de manière hermétique par rapport à l'aimant (2), le capteur (6) pouvant être intégré dans un élément céramique (12), préférence multicouche.

7. Dispositif selon la revendication 6, **caractérisé en ce que** le capteur (6) est intégré dans une plaque ou un capuchon obturant ou recouvrant l'actionneur (1).

8. Dispositif selon l'une des revendications 1 à 7, **ca-**

**ractérisé en ce que** l'actionneur (1) est conçu de façon à ce qu'il exerce une force dans la direction X ou, dans le cas d'une réalisation en double des éléments et d'une disposition croisée, dans les directions X et Y, le cas échéant également dans la direction Z.

9. Dispositif selon l'une des revendications 1 à 8, **caractérisé en ce que** le capteur (6) comprend deux éléments de capteurs ou plus, plus particulièrement des bobines (8), qui sont utilisés avec différentes fréquences porteuses.

10. Dispositif selon l'une des revendications 1 à 9, **caractérisé en ce que** la position de la cible (11) ou de l'aimant (2) est déterminée avec un capteur (6) structuré, dans sa surface active, à travers la ou les bobines (8), le champ magnétique qui est généré par la bobine du capteur (8) étant influencé par l'augmentation ou la diminution de la cible (11) ou de l'aimant (2).

11. Dispositif selon l'une des revendications 1 à 10, **caractérisé en ce que** le capteur (6) comprend au moins une paire de bobines (8), les bobines (8) de la paire de bobines (8) étant dans une disposition différentielle.

12. Dispositif selon l'une des revendications 1 à 11, **caractérisé en ce que** le capteur (6) est conçu de façon à ce que, en plus des déviations (17) de la cible (11) ou de l'aimant (2) dans les directions X et Y, la distance par rapport à la cible (11) ou à l'aimant (2) dans la direction Z soit également déterminée, soit par formation de la somme des signaux de sortie de tous les bobines individuelles (3) soit par une bobine séparée (8) pour la mesure de la distance Z, les bobines (3) étant pilotées pour la détermination des déviations X / Y et la bobine (8) étant pilotée pour la détermination de la distance Z de préférence avec différentes fréquences porteuses.

13. Dispositif selon la revendication 12, **caractérisé en ce que** les bobines (3) pour la mesure de la déviation X / Y et la bobine (8) pour la mesure de la distance Z peuvent être utilisées simultanément ou indépendamment.

14. Dispositif selon l'une des revendications 1 à 13, **caractérisé en ce que** le capteur (6) est complété, pour la mesure de la température dans le capteur (6), par des éléments de résistances, de préférence sous la forme de pistes de résistances (13) dans des sens opposés.

15. Procédé de mesure du mouvement d'un rotor dévié par un actionneur magnétique, l'actionneur comprenant au moins une bobine, de préférence au sens d'un enroulement d'induit, le rotor étant un aimant et la bobine générant un champ magnétique exerçant une force et exerçant une force dans au moins une direction sur l'aimant, plus particulièrement pour une utilisation dans un dispositif actionneur-capteur selon l'une des revendications 1 à 14, le mouvement de l'aimant dans l'au moins une direction étant mesuré par un capteur, le capteur étant disposé dans le flux magnétique transmettant la force, **caractérisé en ce que** le capteur est disposé entre la bobine (3) et l'aimant (2) et **en ce que** le capteur (6) comprend deux éléments de capteurs ou plus, qui mesurent les mouvements de l'actionneur (1) dans la direction X/Y.

EP 3 063 504 B1

FIG. 1

FIG. 2

FIG. 3

12

8

i)

12

8

8

ii)

12

8

8

iii)

FIG. 4 a)

8

12

8

12

FIG. 4 b)

FIG. 5

FIG. 6

FIG. 7

FIG. 8

FIG. 9

FIG. 10

FIG. 11

FIG. 12

FIG. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2009243402 A1
- EP 1538424 A1